# EUROPEAN PATENT APPLICATION

(11) **EP 4 606 734 A1**
(43) Date of publication of application: **27.08.2025**
(21) Application number: 23885645.4
(22) Date of filing: 26.10.2023
(51) Int. Cl.: B65G 1/00, B65G 47/44, B65G 47/46, B65G 47/52

(54) **ARTICLE TRANSPORT FACILITY**

(30) Priority: 01.11.2022 JP 2022175778
(71) Applicant: Daifuku Co., Ltd., Osaka-shi, Osaka 555-0012 (JP)
(72) Inventor: YOSHINAGA, Kazuharu, Gamo-gun, Shiga 529-1692 (JP); TAKAGI, Daiki, Gamo-gun, Shiga 529-1692 (JP)
(74) Representative: Grosse Schumacher Knauer von Hirschhausen
(86) International application number: PCT/JP2023/038689
(87) International publication number: WO 2024/095889

(57) **Abstract**

Provided is an article transport facility including a transport vehicle (1) that transports articles (G) by traveling on a travel surface (Fa), and an article receiving apparatus (2) that receives the articles (G) from the transport vehicle (1). The transport vehicle (1) includes a supporting surface (11f) that supports the articles (G) from below, and a dropping mechanism (12) that drops the articles (G) supported on the supporting surface (11f). The article receiving apparatus (2) includes a receiving surface (20f) that receives the articles (G) dropped by the transport vehicle (1). The receiving surface (20f) is disposed higher than the travel surface (Fa).

## Description

### Technical Field

The present invention relates to an article transport facility including a travel floor, a transport vehicle that transports articles by traveling on a travel surface formed on the travel floor, and an article receiving apparatus that receives the articles from the transport vehicle.

### Background Art

JP 4413982 (Patent Document 1), for example, discloses a facility for transporting and sorting articles. Reference numerals shown below in parentheses in the description of the background art relate to Patent Document 1.

The facility disclosed in Patent Document 1 includes a transfer means (110) for transporting articles placed on a supporting surface of a tray (111), and an unloading part (140) in which the articles dropped from the transfer means (110) are retained. The articles dropped from the transfer means (110) are received by a receiving surface of the unloading part (140) and retained in the unloading part (140), and are unloaded from the unloading part (140) by a pickup operation.

In the facility disclosed in Patent Document 1, the receiving surface of the unloading part (140) is lower than the supporting surface of the tray (111). Between the supporting surface of the tray (111) and the receiving surface of the unloading part (140) is a chute (120) that slopes downward toward the unloading part (140). The articles dropped from the transfer means (110) are transported from the supporting surface of the tray (111) to the receiving surface of the unloading part (140) via the chute (120).

### Prior Art Documents

### Patent Documents

Patent Document 1: JP 4413982

### Disclosure of the Invention

### Problem to be Solved by the Invention

In the facility of Patent Document 1, the chute (120) guides the articles from the supporting surface of the tray (111) to the receiving surface of the unloading part (140), and also softens the impact of the articles dropped from the transfer means (110). However, in order to provide the chute (120) sloping to the receiving surface of the lower unloading part (140), a large horizontal distance needs to be secured from the transfer means (110) to the unloading part (140) unless the inclination angle of the chute (120) is increased, thus leading to the facility increasing in size.

In view of the above situation, a technology that is able to soften the impact of articles dropped from a transport vehicle and is also capable of achieving space saving is desirably realized.

### Means for Solving Problem

An article transport facility including:
a travel floor;
a transport vehicle configured to transport an article by traveling on a travel surface formed on the travel floor; and
an article receiving apparatus configured to receive the article from the transport vehicle,
the transport vehicle including:
   a supporting surface configured to support the article from below; and
   a dropping mechanism configured to drop the article supported on the supporting surface,
the article receiving apparatus including a receiving surface configured to receive the article dropped by the transport vehicle, and
the receiving surface being disposed higher than the travel surface.

According to this configuration, the distance in the up-down direction between the supporting surface of the transport vehicle and the receiving surface of the article receiving apparatus is easily shortened. Shortening this distance in the up-down direction allows the impact of the article when dropped onto the receiving surface of the article receiving apparatus from the transport vehicle to be softened, without an accompanying increase in horizontal space. According to this configuration, it thus becomes possible to soften the impact of articles dropped from the transport vehicle and to achieve space saving.

Further features and advantages of the technology according to the present disclosure will become apparent from the following description of exemplary and non-limiting embodiments with reference to the drawings.

### Brief Description of the Drawings

FIG. 1 is a plan view showing first and second travel floors of an article transport facility.
FIG. 2 is a cross-sectional view taken along line II-II in FIG. 1.
FIG. 3 shows an article being dropped.
FIG. 4 is a diagram showing an article receiving apparatus according to a second embodiment.
FIG. 5 is a diagram showing an article receiving apparatus according to a third embodiment.
FIG. 6 is a diagram showing an article receiving apparatus according to a fourth embodiment.

### Best Mode for Carrying out the Invention

An article transport facility includes a travel floor, a transport vehicle that transports articles by traveling on a travel surface formed on the travel floor, and an article receiving apparatus that receives articles from the transport vehicle. Hereinafter, embodiments of the article transport facility will be described, taking an article transport facility having a plurality of travel floors as an example.

### [First Embodiment]

A first embodiment of the article transport facility according to the present disclosure will be described.

### [Outline of Article Transport Facility]

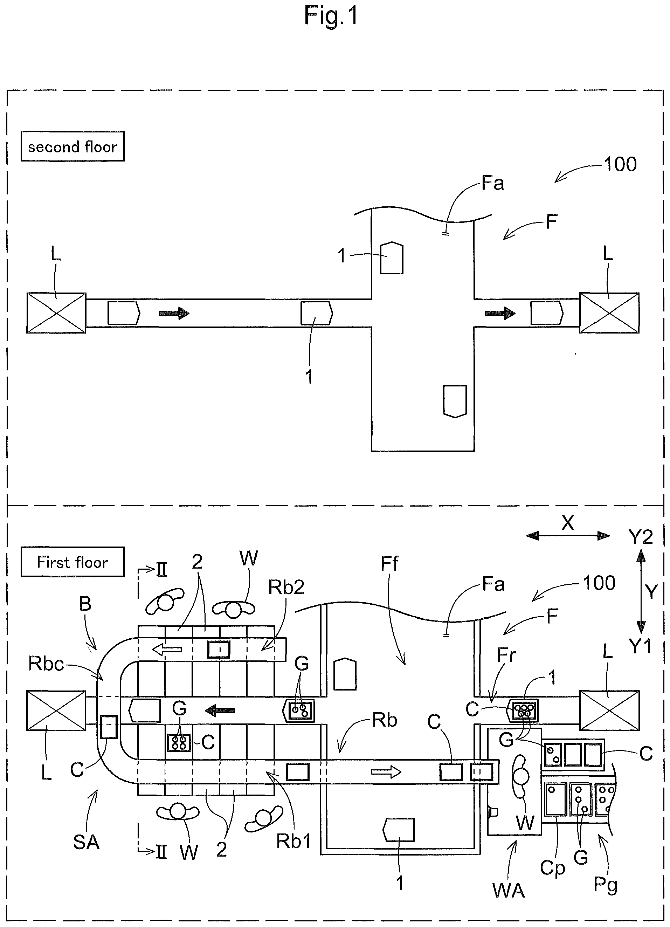

First, an outline of the article transport facility will be described, with reference to FIG. 1. As shown in FIG. 1, an article transport facility 100 includes a plurality of travel floors F arranged in the up-down direction and a transport vehicle 1 that travels on a travel surface Fa formed on each travel floor F. On each travel floor F, a plurality of transport vehicles 1 travel on the travel surface Fa.

In the example shown in FIG. 1, the article transport facility 100 includes two travel floors F. FIG. 1 shows the first travel floor F and the second travel floor F. The present invention is, however, not limited to such a configuration, and the article transport facility 100 may include three or more travel floors F.

The article transport facility 100 includes a transport path Fr, which is a path along which the transport vehicles 1 travel in order to transport articles G. The transport path Fr is constituted as part of the travel floors F. In the present embodiment, each travel floor F includes the transport path Fr and a travel field Ff. The transport path Fr is a single path extending from a work area WA to a sorting area SA which will be described later. When transporting articles G from the work area WA to the sorting area SA, the transport vehicles 1 travel along the transport path Fr. The travel field Ff is a planer portion of the travel floors F. The transport vehicles 1 can travel freely in the travel field Ff. In the present embodiment, the transport path Fr and the travel field Ff partially overlap with each other. Specifically, the travel field Ff is provided between the work area WA and the sorting area SA, and the transport path Fr crosses the travel field Ff between the work area WA and the sorting area SA.

Hereinafter, directions will be defined with reference to the transport path Fr. Specifically, the direction parallel to the transport path Fr is "a path direction X", and the direction orthogonal to the path direction X as viewed in the up-down direction is "a path width direction Y". One side in the path width direction Y is "a first side Y1 in the path width direction", and the other side in the path width direction Y is "a second side Y2 in the path width direction".

The transport vehicles 1 travel in a straight line and change direction by turning around an axis in the up-down direction. By travel straight and turning, the transport vehicles 1 can freely travel through the travel field Ff on both the first and second travel floors F.

The article transport facility 100 includes a pair of lifters L that raise and lower the transport vehicles 1 between the travel floors F (two floors in the present example), an article supply section Pg that supplies the articles G, the work area WA in which the articles G supplied from the article supply section Pg are delivered to the transport vehicles 1, the sorting area SA in which the articles G are sorted, and an empty container collection apparatus B that collects empty containers C that arise from the sorting in the sorting area SA.

In the present embodiment, both the work area WA and the sorting area SA are provided on the first travel floor F. The work area WA and the sorting area SA are not provided on the second travel floor F.

The work area WA is located adjacent to both the transport path Fr and the article supply section Pg. In the present embodiment, the article supply section Pg supplies the articles G to the work area WA with the articles G housed in a supply container Cp. In the work area WA, the articles G housed in the supply containers Cp are unloaded and delivered to the transport vehicles 1 waiting on the transport path Fr. The delivery of the articles G to the transport vehicles 1 may be performed with the articles G housed in a separate container C from the supply container Cp, or the articles G may be delivered directly without being housed in the container C. In the present embodiment, the work in the work area WA is carried out by workers W. The work may, however, be performed by robots instead of workers W, or by both workers W and robots.

The transport vehicles 1 transport the articles G or the containers C housing the articles G. In the present embodiment, the transport vehicles 1 transport the articles G received in the work area WA or the containers C housing the articles G to the sorting area SA.

The sorting area SA is provided adjacent to the transport path Fr in the path width direction Y at a location spaced away from the work area WA. In the sorting area SA, the articles G transported by the transport vehicles 1 are sorted. Sorting is performed on the basis of predetermined order information. For example, the order information includes various information such as customer information, shipping destination information, and product type information, for example.

In the present embodiment, when the transport vehicles 1 transport the articles G housed in the containers C to the sorting area SA, unloading of the articles G from the containers C transported by the transport vehicles 1 is performed in the sorting area SA. That is, sorting includes unloading the articles G from the containers C transported by the transport vehicles 1. As a result of the unloading, the articles G are separated from the containers C and empty containers C arises. When the transport vehicles 1 transport articles G (that are not housed in containers C) to the sorting area SA, the articles G transported by the transport vehicles 1 are received in the sorting area SA.

The empty container collection apparatus B collects the empty containers C that arise from the unloading. The empty container collection apparatus B transports the empty containers C along a collection route Rb that extends to a position adjacent to the work area WA. In the present example, the collection route Rb extends into the work area WA. The empty containers C collected by the empty container collection apparatus B are transported to the work area WA along the collection route Rb and used in the work area WA. The empty container collection apparatus B is constituted by a conveyor, for example. The empty container collection apparatus B constituted by a conveyor extends along the collection route Rb. In the present embodiment, sorting (including unloading) of the articles G in the sorting area SA is carried out by workers W. The sorting may, however, be performed by robots instead of workers W, or by both workers W and robots.

After delivering the articles G to the sorting area SA, the transport vehicles 1 ride one of the lifters L to the other travel floor F (second travel floor F in the present example). The transport vehicles 1 then travel on the second travel floor F and ride the other lifter L back to the travel floor F (first travel floor F in the present example) on which the work area WA and sorting area SA described above are provided. After returning to the first travel floor F, the transport vehicles 1 again receive articles G in the work area WA and transport the articles G to the sorting area SA in the manner described above.

### [Detailed Configuration of Sorting Area]

As described above, the sorting area SA is the area in which the articles G are sorted, and is provided adjacent to the transport path Fr in the path width direction Y.

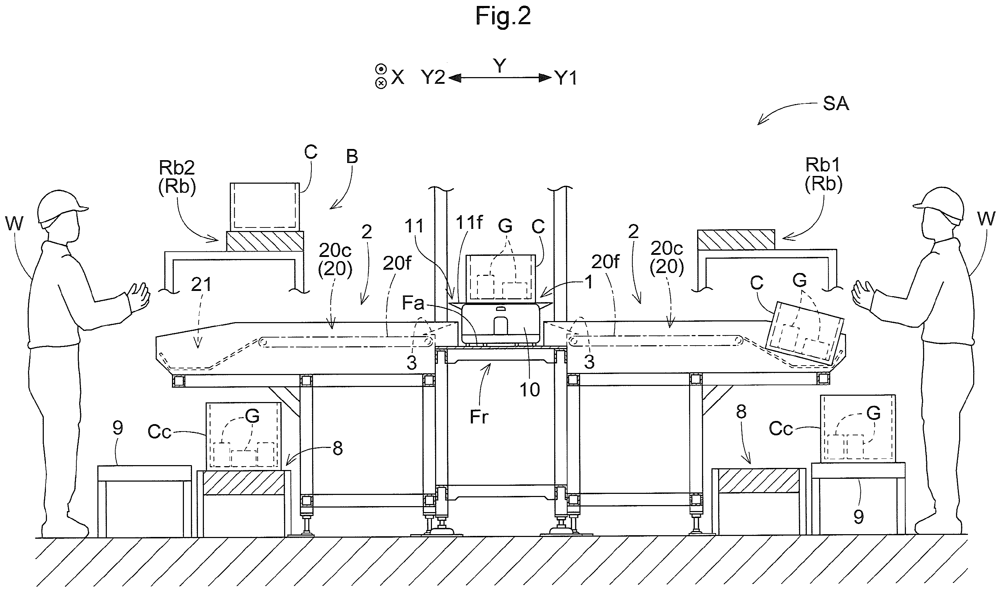

As shown in FIGS. 1 and 2, the article transport facility 100 includes an article receiving apparatus 2 that receives the articles G from the transport vehicles 1. The article receiving apparatus 2 is disposed in the sorting area SA. In the present embodiment, a plurality of article receiving apparatuses 2 are disposed in the sorting area SA. The article receiving apparatuses 2 each transport the articles G or the containers C received from the transport vehicles 1 to the work site of the workers W (or robots) working in the sorting area SA. A plurality of work sites equal to the number of article receiving apparatuses 2 can thereby be distributed within the sorting area SA. Adopting this configuration facilitates the sorting performed at each work site and can contribute to improving work efficiency as a whole.

In the present embodiment, the article receiving apparatuses 2 are arranged parallel to the path direction X. This enables as many article receiving apparatuses 2 as possible to be disposed in the region of the sorting area SA along the transport path Fr in the path direction X. Thus, it is possible to improve the capacity of sorting in the sorting area SA as a whole.

In the present embodiment, the article receiving apparatuses 2 each transport the articles G or the containers C in the path width direction Y. Thus, the sorting area SA can be prevented from expanding in the path direction X, compared to the case where the transport direction of the article receiving apparatus 2 is set in the path direction X or is set to inclines in the path direction X (has a path direction X component). In the present example, each article receiving apparatus 2 includes a transport mechanism 20, and uses the transport mechanism 20 to transport the articles G or the containers C in the path width direction Y.

In the present embodiment, the article receiving apparatuses 2 are disposed on both sides across the transport path Fr in the sorting area SA. That is, the article receiving apparatuses 2 are disposed on the first and second sides Y1 and Y2 in the path width direction relative to the transport path Fr. Sorting can thereby be performed on both sides across the transport path Fr, and the sorting capacity can be improved in the sorting area SA as a whole.

As described above, the empty container collection apparatus B collects the empty containers C arising from the unloading performed as part of the sorting. This unloading involves unloading the articles G from the containers C transported by the transport vehicles 1. The empty containers C are transported along the collection route Rb to the work area WA.

In the present embodiment, the collection route Rb extends in a direction that intersects the transport direction of the articles G or the containers C by the article receiving apparatuses 2 and overlaps with the article receiving apparatuses 2 as viewed in the up-down direction. In the present example, the collection route Rb extends in a direction orthogonal to the article receiving apparatuses 2 extending in the path width direction Y, that is, in the path direction X, as viewed in the up-down direction.

In the example shown in FIG. 2, the collection route Rb is at a different height from the transport path Fr. More specifically, the collection route Rb is disposed higher than the transport path Fr. When the work in the sorting area SA is carried out by the workers W, the collection route Rb is preferably located at around chest height of a worker W having an average height. It is thereby easier for the workers W to place the empty containers C on the collection route Rb. Note that a position adjustment mechanism for adjusting the position of the collection route Rb relative to the workers W may be provided.

As described above, the article receiving apparatuses 2 are disposed on both the first and second sides Y1 and Y2 in the path width direction relative to the transport path Fr. In the present embodiment, the collection route Rb is constituted by a single route that overlaps with all of the article receiving apparatuses 2 (or most of the article receiving apparatuses 2) as viewed in the up-down direction. According to the above configuration, the empty containers C that arise from the sorting in the article receiving apparatuses 2 divided between the two sides across the transport path Fr can be collected using one collection route Rb and transported to the work area WA. In the present embodiment, the collection route Rb includes a first interval Rb1 disposed on the first side Y1 in the path width direction relative to the transport path Fr, a second interval Rb2 disposed on the second side Y2 in the path width direction relative to the transport path Fr, and a connecting interval Rbc connecting the first interval Rb1 and the second interval Rb2. The first interval Rb1 overlaps with a plurality of the article receiving apparatuses 2 as viewed in the up-down direction, on the first side Y1 in the path width direction relative to the transport path Fr. The second interval Rb2 overlaps with a plurality of the article receiving apparatuses 2 as viewed in the up-down direction, on the second side Y2 in the path width direction relative to the transport path Fr. The connecting interval Rbc overlaps with the transport path Fr as viewed in the up-down direction.

As described above, in the sorting area SA, receiving of the articles G transported by the transport vehicle 1 and unloading of the articles G from the containers C transported by the transport vehicle 1 are performed. In the present embodiment, the articles G unloaded from the containers C and the articles G received from the transport vehicles 1 are collected by order information and transported to where the next process is performed.

As shown in FIG. 2, in the present embodiment, there are provided, in the sorting area SA, collection containers Cc that each house one or more articles G collected by order information in the sorting, and discharge conveyors 8 that discharge the collection containers Cc from the sorting area SA. In the illustrated example, there are provided, in the sorting area SA, placing platforms 9 on which the collection containers Cc are placed, and the workers W (or robots) house the required articles G in the collection containers Cc placed on the placing platforms 9, and move the collection containers Cc from the placing platforms 9 to the discharge conveyors 8. These collection containers Cc are transported out of the sorting area SA by the discharge conveyors 8, and transported to where the next process is performed, for example. Note that, in FIG. 1, the placing platforms 9 and the discharge conveyors 8 are omitted to avoid complicating the drawings.

### [Detailed Configuration of Transport Vehicle and Article Receiving Apparatus]

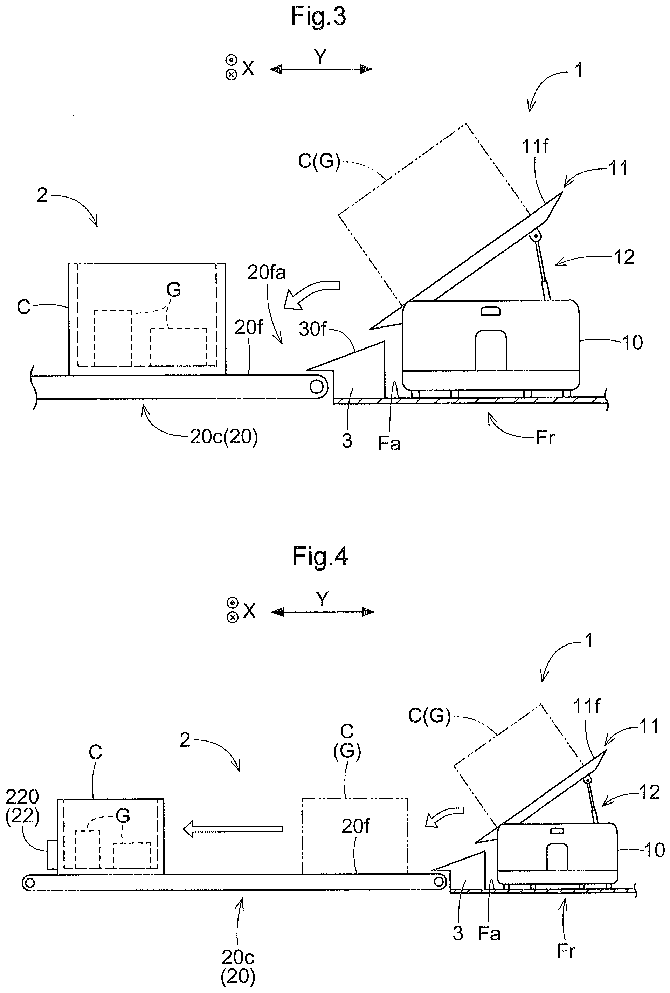

As described above, the transport vehicle 1 transports the articles G or the containers C housing the articles G to the article receiving apparatus 2. The article receiving apparatus 2 receives the articles G transported by the transport vehicle 1 or the containers C housing the articles G. Hereinafter, the configurations of the transport vehicle 1 and the article receiving apparatus 2 will be described in detail with reference to FIGS. 2 and 3. Note that, hereinafter, the articles G and the containers C housing the articles G may be simply referred to as "articles G".

The transport vehicle 1 transports the articles G by traveling on the travel surface Fa of the transport path Fr. The transport vehicle 1 includes a supporting surface 11f that supports the articles G from below, and a dropping mechanism 12 that drops the articles G supported on the supporting surface 11f. In the present embodiment, the transport vehicle 1 includes a truck body 10 and a supporting platform 11 coupled to the truck body 10. In the present embodiment, the wheels of the truck body 10 roll on the travel surface Fa. The supporting surface 11f is constituted by the upper surface of the supporting platform 11. The dropping mechanism 12 is installed in the truck body 10. In the present embodiment, the dropping mechanism 12 drops the articles G toward the outer side of the transport vehicle 1 in the path width direction Y.

As shown in FIG. 3, the dropping mechanism 12 is a mechanism for dropping the articles G supported on the supporting surface 11f onto the article receiving apparatus 2. Herein, "dropping" means moving the articles G downward under their own weight. For example, "dropping" includes using an inclined surface to slide or roll the articles G or dropping the articles G vertically or diagonally.

In the present embodiment, when dropping the articles G supported on the supporting surface 11f, the dropping mechanism 12 inclines the supporting surface 11f in such a manner that the end portion thereof closer to a receiving surface 20f (described later) of the article receiving apparatus 2 is lowered. In the present example, the dropping mechanism 12, by inclining the supporting platform 11, inclines the supporting surface 11f, which is the upper surface thereof.

In the present embodiment, the transport vehicles 1 can also drop the articles G onto the article receiving apparatuses 2 disposed on both the first and second sides Y1 and Y2 in the path width direction relative to the transport path Fr. When dropping the articles G onto the article receiving apparatuses 2 disposed on the first side Y1 in the path width direction relative to the transport path Fr, the dropping mechanism 12 inclines the supporting surface 11f in such a manner that the end portion of the supporting surface 11f on the first side Y1 in the path width direction is lower than the end portion thereof on the second side Y2 in the path width direction. On the other hand, when dropping the articles G onto the article receiving apparatuses 2 disposed on the second side Y2 in the path width direction relative to the transport path Fr, the dropping mechanism 12 inclines the supporting surface 11f in such a manner that the end portion of the supporting surface 11f on the second side Y2 in the path width direction is lower than the end portion thereof on the first side Y1 in the path width direction. The dropping mechanism 12 may use a known means such as a motor or a cylinder to incline the supporting surface 11f.

As shown in FIG. 2, the article receiving apparatus 2 includes the receiving surface 20f that receives the articles G dropped by the transport vehicle 1. In the present embodiment, the receiving surface 20f is horizontal. Stabilizing the posture of the articles G received by the receiving surface 20f is thereby facilitated.

With the transport vehicle 1 disposed in the position for dropping articles G onto the article receiving apparatus 2 (hereinafter, "drop ready state"), the supporting surface 11f is disposed higher than the receiving surface 20f. The entire supporting surface 11f is disposed higher than the receiving surface 20f, regardless of the incline. The articles G dropped from the supporting surface 11f are thereby received by the receiving surface 20f disposed below the supporting surface 11f.

In the present embodiment, in the drop ready state of the transport vehicle 1, there is provided, between the supporting surface 11f of the transport vehicle 1 and the receiving surface 20f of the article receiving apparatus 2 in the path width direction Y, a guide section 3 that guides the articles G that are dropped. The guide section 3 is provided between the supporting surface 11f and the receiving surface 20f in the up-down direction. The guide section 3 includes an inclined surface 30f that slopes downward in the path width direction Y from the end portion thereof closer to the supporting surface 11f. The articles G dropped from the supporting surface 11f can thereby be appropriately guided toward the receiving surface 20f disposed downward thereof. Note that the articles G dropped from the supporting surface 11f are not necessarily guided by the guide section 3. The articles G may be dropped directly onto the receiving surface 20f from the supporting surface 11f. If the articles G cannot be dropped directly onto the receiving surface 20f due to displacement of the dropping position of the articles G or the like, the articles G dropped from the supporting surface 11f are guided onto the receiving surface 20f by the inclined surface 30f of the guide section 3.

As described above, in the present embodiment, the article receiving apparatus 2 includes the transport mechanism 20 for transporting the articles G received by the receiving surface 20f. In the present example, the transport mechanism 20 is a conveyor 20c, and the receiving surface 20f is the transport surface of the conveyor 20c. As the conveyor 20c constituting the transport mechanism 20, a well-known conveyor such as a belt conveyor or a roller conveyor can be used. When the conveyor 20c is constituted by a belt conveyor, the receiving surface 20f is the upper surface of the belt. When the conveyor 20c is constituted by a roller conveyor, the receiving surface 20f is a virtual surface that continuously connects the upper ends of a plurality of rollers.

In the present embodiment, the article receiving apparatus 2 includes a retaining section 21 that retains the articles G transported by the transport mechanism 20. The retaining section 21 is disposed adjacent to the transport mechanism 20. In the present example, the retaining section 21 is disposed adjacent to the outer side of the transport mechanism 20 in the path width direction Y. The articles G retained in the retaining section 21 are sorted. In the present example, around the retaining section 21 are disposed the collection container Cc in which the articles G unloaded from the containers C in the sorting are collected, the placing platform 9 on which the collection container Cc is placed, the discharge conveyor 8 for discharging the collection container Cc, and the empty container collection apparatus B for collecting the empty containers C that arise from the sorting.

Here, when the transport vehicle 1 is configured to drop the articles G, the articles G are likely to receive an impact when dropped. In a mode in which the articles G are moved downward under their own weight, an impact of some sort is unavoidable. However, the article transport facility 100 according to the present disclosure enables the impact on the articles G when dropped to be softened.

As shown in FIG. 3, the receiving surface 20f of the article receiving apparatus 2 is disposed higher than the travel surface Fa of the transport path Fr. The distance in the up-down direction between the supporting surface 11f of the transport vehicle 1 and the receiving surface 20f of the article receiving apparatus 2 is thereby easily shortened. Shortening this distance in the up-down direction enables the impact of the articles G when dropped onto the receiving surface 20f of the article receiving apparatus 2 from the transport vehicle 1 to be softened, without an accompanying increase in horizontal space.

As described above, in the present embodiment, in the drop ready state of the transport vehicle 1, the guide section 3 is provided between the supporting surface 11f of the transport vehicle 1 and the receiving surface 20f of the article receiving apparatus 2 in the path width direction Y. The guide section 3 is provided between the supporting surface 11f and the receiving surface 20f in the up-down direction, and has the inclined surface 30f sloping downward in the path width direction Y from the end portion thereof closer to the supporting surface 11f. When the articles G cannot be dropped directly onto the receiving surface 20f due to displacement of the dropping position of the articles G dropped from the supporting surface 11f or the like, the articles G dropped from the supporting surface 11f are guided onto the receiving surface 20f by the inclined surface 30f of the guide section 3. Accordingly, the impact of the articles G when dropped from the transport vehicle 1 can also be softened by the guide section 3.

In the present embodiment, the receiving surface 20f has a drop region 20fa that serves as a reference for the drop position of the articles G. The articles G dropped from the transport vehicle 1 are ideally dropped in the drop region 20fa. In the present embodiment, the drop region 20fa is set to a region that includes the end portion of the receiving surface 20f on the inner side in the path width direction Y (end portion closer to transport path Fr). At least the drop region 20fa of the receiving surface 20f is disposed higher than the travel surface Fa. The portion of the receiving surface 20f other than the drop region 20fa need not be disposed higher than the travel surface Fa. However, in the present example, the receiving surface 20f is disposed horizontally, and thus the entire receiving surface 20f including the drop region 20fa is disposed higher than the travel surface Fa. Even if the articles G are dropped at a position displaced from the drop region 20fa, the portion of the receiving surface 20f onto which the articles G are dropped will be higher than the travel surface Fa, and thus the impact of the articles G when dropped can thereby be appropriately softened.

According to the article transport facility 100 described above, the distance in the up-down direction between the supporting surface 11f of the transport vehicle 1 and the receiving surface 20f of the article receiving apparatus 2 can be shortened, thus making it possible to soften the impact of the articles G when dropped from the transport vehicle 1 onto the receiving surface 20f of the article receiving apparatus 2, without an accompanying increase in horizontal space.

### [Second Embodiment]

Next, a second embodiment of the article transport facility 100 will be described with reference to FIG. 4. The following description focuses on the differences from the first embodiment. Points not specifically discussed below are similar to the first embodiment.

As shown in FIG. 4, in the present embodiment, the article receiving apparatus 2 includes a regulating apparatus 22 provided at the downstream end portion of the transport route along which the conveyor 20c transports the articles G or at a predetermined position upstream thereof. In the present example, the regulating apparatus 22 is provided at the downstream end portion of the transport route along which the conveyor 20c transports the articles G, that is, on the outer side of the conveyor 20c in the path width direction Y (opposite side to transport path Fr). The regulating apparatus 22 regulates movement of the articles G by the conveyor 20c. The articles G can thereby be retained at the downstream end portion of the transport route of the conveyor 20c. Therefore, the conveyor 20c can also be utilized as a buffer for the articles G (place for retaining articles G for sorting, etc.). Also, since the regulating apparatus 22 regulates movement of the articles G, the articles G can be retained on the conveyor 20c without stopping the operation of the conveyor 20c, making it possible to avoid complicating control of the conveyor 20c.

In the present embodiment, the regulating apparatus 22 includes a regulating body 220 disposed to overlap with the movement locus of the articles G when transported by the conveyor 20c. Movement of the articles G transported by the conveyor 20c can thereby be appropriately regulated.

Note that the regulating apparatus 22 may include a drive section (not shown) that drives the regulating body 220, and may be configured to switch the position of the regulating body 220 between a position that overlaps with the movement locus of the articles G and a position that does not overlap with the movement locus of the articles G. Alternatively, the regulating apparatus 22 may not include such a drive section. In this case, the regulating body 220 is fixed to a position overlapping with the movement locus of the articles G.

### [Third Embodiment]

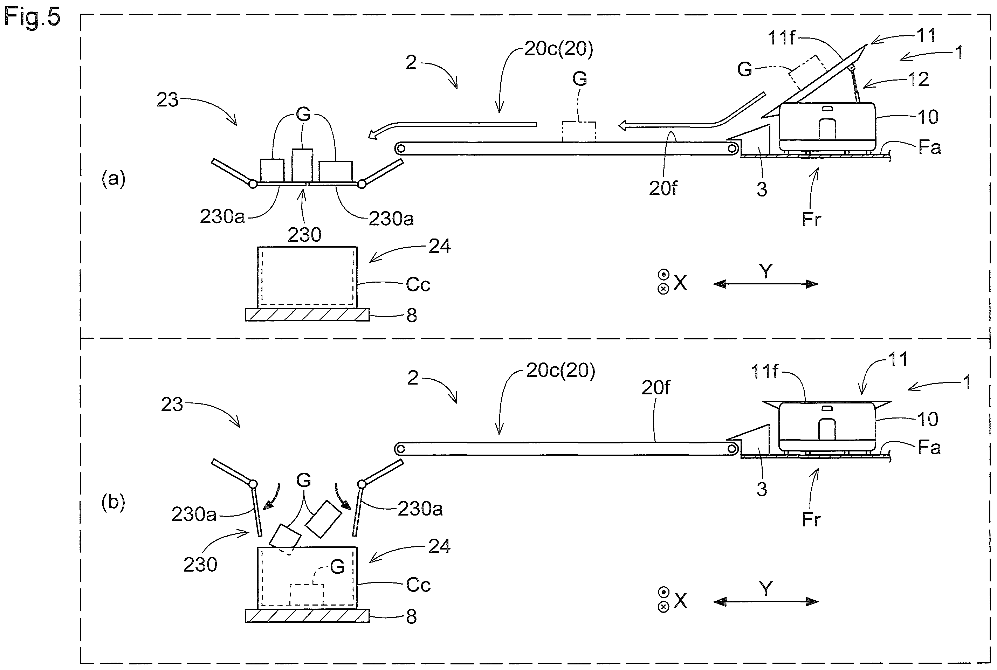

Next, a third embodiment of the article transport facility 100 will be described with reference to FIG. 5. The following description focuses on the differences from the first embodiment. Points not specifically discussed below are similar to the first embodiment.

As shown in FIG. 5, in the present embodiment, the article receiving apparatus 2 includes a feeding apparatus 23 provided at the downstream end portion of the transport route along which the conveyor 20c transports the articles G. In the present example, the feeding apparatus 23 is provided adjacent to the outer side (opposite side to transport path Fr) of the conveyor 20c in the path width direction Y.

In the present embodiment, the transport vehicle 1 drops only articles G that exclude the container C onto the article receiving apparatus 2 provided with the feeding apparatus 23. By way of further description, in response to the transport vehicle 1 receiving articles G that are not housed in the container C in the work area WA (see FIG. 1), the article receiving apparatus 2 provided with the feeding apparatus 23 can be selected as the transport destination of the articles G.

In the present embodiment, the feeding apparatus 23 retains one or more articles G transported by the conveyor 20c and feeds the retained articles G into a feeding section 24 disposed below the receiving surface 20f. In the present example, the discharge conveyor 8 and the collection container Cc placed on the discharge conveyor 8 are disposed in the feeding section 24. The articles G fed into the feeding section 24 by the feeding apparatus 23 are automatically housed in the collection container Cc placed on the discharge conveyor 8. In this case, before the articles G are fed in, the discharge conveyor 8 stops operating, and the collection container Cc is stationary on the discharge conveyor 8. Then, after one or more articles G based on order information, for example, are housed in the collection container Cc as a result of articles G being fed one or more times, the discharge conveyor 8 operates and transports the collection container Cc.

In the present embodiment, the feeding apparatus 23 includes a movable support section 230 that supports the articles G transported by the conveyor 20c. The movable support section 230 includes a plurality of supports 230a (one support also possible) and a drive section (not shown) that drives the supports 230a. The drive section switches the supports 230a between supporting the articles G and releasing support of the articles G. With the articles G retained in the feeding apparatus 23 (with articles G supported by supports 230a), the supports 230a are released at an appropriate timing, and the articles G are fed into the feeding section 24. Switching the supports 230a between being supported and released may be performed automatically by the feeding apparatus 23 or manually by a worker W.

### [Fourth Embodiment]

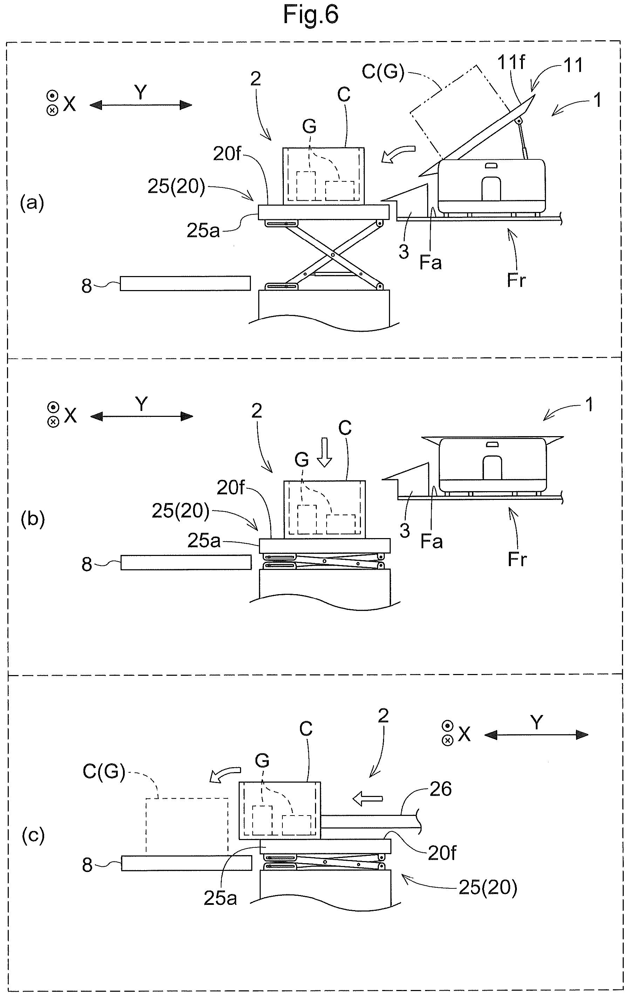

Next, a fourth embodiment of the article transport facility 100 will be described with reference to FIG. 6. The following description focuses on the differences from the first embodiment. Points not specifically discussed below are similar to the first embodiment.

As shown in FIG. 6, in the present embodiment, the article receiving apparatus 2 includes a lifting mechanism 25 (example of transport mechanism 20) that receives the articles G dropped from the transport vehicle 1 and raises and lowers the articles G. The lifting mechanism 25 includes a lifting platform 25a having the receiving surface 20f. The lifting mechanism 25 raises and lowers the lifting platform 25a to a raised position and a lower position set lower than the raised position. With the lifting platform 25a in the raised position (see FIG. 6(a)), the receiving surface 20f is disposed upward of the travel surface Fa of the transport path Fr. In this state, the lifting mechanism 25 receives, with the receiving surface 20f, the articles G dropped from the transport vehicle 1.

In the present embodiment, the article receiving apparatus 2 includes a pusher 26 that pushes the articles G placed on the lifting platform 25a in the horizontal direction. The lifting mechanism 25 lowers the lifting platform 25a to the lower position, with the articles G placed on the lifting platform 25a (see FIG. 6(b)). The pusher 26 then pushes the articles G (in the illustrated example, the container C housing the articles G) placed on the lifting platform 25a in the horizontal direction, with the lifting platform 25a disposed in the lower position (see FIG. 6(c)). For example, the pusher 26 pushes the articles G on the lifting platform 25a toward the discharge conveyor 8. The articles G thereby fall from the lifting platform 25a and are placed on the discharge conveyor 8. Thereafter, the articles G are transported to the next destination by the discharge conveyor 8.

In the present embodiment, a configuration is described in which the container C housing the articles G is pushed by the pusher 26. However, it is also possible to directly push articles G not housed in the container C with the pusher 26. In this case, for example, the collection container Cc is desirably positioned where the articles G will be pushed by the pusher 26. With such a configuration, one or more articles G based on order information are housed in the collection container Cc, by cooperation between the lifting mechanism 25 and the pusher 26. In this case, the collection container Cc is desirably placed on the discharge conveyor 8. This enables the articles G housed in the collection container Cc to be directly transported to the next destination by the discharge conveyor 8.

### [Other Embodiments]

Next, other embodiments of the article transport facility will be described.
(1) In the above embodiments, an example is described in which the transport mechanism 20 is the conveyor 20c. However, the present invention is not limited to such an example, and the transport mechanism 20 may be, for example, an automated transport vehicle. In this case, for example, a separate transport vehicle having a similar configuration to the transport vehicle 1 that transports the articles G by traveling along the transport path Fr may be used as the transport mechanism 20. That is, the transport vehicle 1 on the transport path Fr may be configured to drop the articles G onto another transport vehicle serving as the transport mechanism 20. In this case, the route traveled by the other transport vehicle serving as the transport mechanism 20 is set to be positioned lower than the transport path Fr. The supporting surface of the other transport vehicle serving as the transport mechanism 20 corresponds to the "receiving surface", and is disposed higher than the travel surface Fa of the transport path Fr.
(2) In the above embodiments, an example is described in which the article receiving apparatus 2 includes the transport mechanism 20 that transports the articles G received by the receiving surface 20f. However, the present invention is not limited to such an example, and the article receiving apparatus 2 may not include such a transport mechanism 20. In this case, the article receiving apparatus 2 desirably includes a platform or the like on which the receiving surface 20f is formed.
(3) In the above embodiments, an example is described in which the receiving surface 20f of the article receiving apparatus 2 is disposed horizontally. However, the present invention is not limited to such an example, and the receiving surface 20f may be partially or wholly disposed at an incline to the horizontal.
(4) In the above embodiments, an example is described in which, when dropping the articles G supported on the supporting surface 11f, the dropping mechanism 12 inclines the supporting surface 11f in such a manner that the end portion thereof closer to the receiving surface 20f of the article receiving apparatus 2 is lowered. However, the present invention is not limited to such an example, and the dropping mechanism 12 can include various configurations for dropping the articles G supported on the supporting surface 11f. For example, the dropping mechanism 12 may include a pusher, and may be configured to use the pusher to push the articles G on the supporting surface 11f and drop the articles G from the supporting surface 11f. Alternatively, the dropping mechanism 12 may include a grasping mechanism, and be configured to drop the articles G from the supporting surface 11f, by using the grasping mechanism to grasp and lift the articles G on the supporting surface 11f, and to release the grip on the outer side of the supporting surface 11f.
(5) In the above embodiments, an example is described in which the guide section 3 includes the inclined surface 30f that inclines downward from the end portion thereof closer to the supporting surface 11f in the path width direction Y. However, the present invention is not limited to such an example, and the guide section 3 may be constituted by a roller, for example. The roller rotates around an axis parallel to the path direction X. Even with such a configuration, the guide section 3 can appropriately guide the articles G dropped from the transport vehicle 1 with respect to the receiving surface 20f of the article receiving apparatus 2.
(6) Note that the configurations disclosed in the above-described embodiments can also be applied in combination with configurations disclosed in other embodiments as long as no inconsistencies arise. The embodiments disclosed herein are merely illustrative in all respects, in relation also to other configurations. Accordingly, various modifications can be made as appropriate, within a range that does not depart from the gist of the present disclosure.

### [Outline of the Embodiments]

Hereinafter, the above article transport facility will be described.

An article transport facility including:
a travel floor;
a transport vehicle configured to transport an article by traveling on a travel surface formed on the travel floor; and
an article receiving apparatus configured to receive the article from the transport vehicle,
the transport vehicle including:
   a supporting surface configured to support the article from below; and
   a dropping mechanism configured to drop the article supported on the supporting surface,
the article receiving apparatus including a receiving surface configured to receive the article dropped by the transport vehicle, and
the receiving surface being disposed higher than the travel surface.

According to this configuration, the distance in the up-down direction between the supporting surface of the transport vehicle and the receiving surface of the article receiving apparatus can be easily shortened. By shortening this distance in the up-down direction, it becomes possible to soften the impact of the article when dropped from the transport vehicle onto the receiving surface of the article receiving apparatus, without an accompanying increase in horizontal space. In this way, according to this configuration, the impact of articles that are dropped from the transport vehicle can be softened, and space saving can be achieved.

Preferably the article receiving apparatus includes a transport mechanism configured to transport the article received by the receiving surface.

According to this configuration, articles dropped by the transport vehicle and received by the receiving surface can be further transported to another position.

Preferably the transport mechanism is a conveyor,
the receiving surface is a transport surface of the conveyor,
the article receiving apparatus includes:
   a regulating apparatus provided at a downstream end portion of a transport route along which the conveyor transports the article or at a predetermined position upstream thereof, and
the regulating apparatus is configured to regulate movement of the article by the conveyor.

According to the present configuration, articles can be retained at the downstream end portion of the transport route of the conveyor or at an intermediate portion of the transport route. Therefore, the conveyor can also be utilized as a buffer of articles (place for retaining articles for sorting, etc.).

Preferably the transport mechanism is a conveyor,
the article receiving apparatus includes:
   a feeding apparatus provided at a downstream end portion of a transport route along which the conveyor transports the article, and
the feeding apparatus is configured to retain at least one article transported by the conveyor and to feed the retained article into a feeding section disposed below the receiving surface.

According to this configuration, at least one article transported by the conveyor can be fed by the feeding apparatus into the feeding section at any timing.

Preferably the receiving surface is disposed horizontally.

According to this configuration, the posture of articles received by the receiving surface can be easily stabilized.

Preferably the dropping mechanism is configured to, when dropping the article supported on the supporting surface, incline the supporting surface in such a manner that an end portion thereof closer to the receiving surface is lowered.

According to this configuration, articles can be dropped from the supporting surface onto the receiving surface due to the comparatively simple structure.

### Industrial Applicability

The technology according to the present disclosure can be utilized in an article transport facility including a travel floor, a transport vehicle that transports articles by traveling on a travel surface formed on the travel floor, and an article receiving apparatus that receives the articles from the transport vehicle.

### Description of Reference Signs

100: Article transport facility
1: Transport vehicle
11f: Supporting surface
12: Dropping mechanism
2: Article receiving apparatus
20: Transport mechanism
20c: Conveyor
20f: Receiving surface
22: Regulating apparatus
23: Feeding apparatus
24: Feeding section
F: Travel floor
Fa: Travel surface
G: Article

## Claims

1. An article transport facility comprising:
a travel floor;
a transport vehicle configured to transport an article by traveling on a travel surface formed on the travel floor; and
an article receiving apparatus configured to receive the article from the transport vehicle,
the transport vehicle including:
a supporting surface configured to support the article from below; and
a dropping mechanism configured to drop the article supported on the supporting surface,
the article receiving apparatus including a receiving surface configured to receive the article dropped by the transport vehicle, and
the receiving surface being disposed higher than the travel surface.

2. The article transport facility according to claim 1, wherein the article receiving apparatus includes a transport mechanism configured to transport the article received by the receiving surface.

3. The article transport facility according to claim 2,
wherein the transport mechanism is a conveyor,
the receiving surface is a transport surface of the conveyor,
the article receiving apparatus includes:
a regulating apparatus provided at a downstream end portion of a transport route along which the conveyor transports the article or at a predetermined position upstream thereof, and
the regulating apparatus is configured to regulate movement of the article by the conveyor.

4. The article transport facility according to claim 2,
wherein the transport mechanism is a conveyor,
the article receiving apparatus includes:
a feeding apparatus provided at a downstream end portion of a transport route along which the conveyor transports the article, and
the feeding apparatus is configured to retain at least one article transported by the conveyor, and to feed the retained article into a feeding section disposed below the receiving surface.

5. The article transport facility according to claim 1, wherein the receiving surface is disposed horizontally.

6. The article transport facility according to any one of claims 1 to 5, wherein the dropping mechanism is configured to, when dropping the article supported on the supporting surface, incline the supporting surface in such a manner that an end portion thereof closer to the receiving surface is lowered.
